# FASCICULE DE BREVET EUROPEEN

(11) **EP 4 178 785 B1**
(45) Date de publication et mention de la délivrance du brevet: **11.02.2026**
(21) Numéro de dépôt: 21739254.7
(22) Date de dépôt: 29.06.2021
(51) Int. Cl.: B29C 64/118, B29C 64/153, B33Y 70/00, C08G 63/672, C08L 67/02

(54) **POLYESTER THERMOPLASTIQUE POUR LA FABRICATION D'OBJET D'IMPRESSION 3D**
THERMOPLASTISCHER POLYESTER ZUR HERSTELLUNG VON 3D-GEDRUCKTEN OBJEKTEN
THERMOPLASTIC POLYESTER FOR PRODUCING 3D-PRINTED OBJECTS

(30) Priorité: 10.07.2020 FR 2007345
(43) Date de publication de la demande: 17.05.2023
(73) Titulaire: ROQUETTE FRERES, 62136 Lestrem (FR)
(72) Inventeur: AMEDRO, Hélène, Bethune 62400 (FR); SAINT-LOUP, René, 59160 Lomme (FR)
(74) Mandataire: Plasseraud IP
(86) Numéro de dépôt international: PCT/EP2021/025241
(87) Numéro de publication internationale: WO 2022/008097

(56) Documents cités:
- WO-A1-2018/212596
- CN-A- 106 866 948

## Description

### Domaine technique

La présente invention se rapporte au domaine de l'impression 3D et concerne notamment l'utilisation d'un polyester thermoplastique pour la fabrication d'objet d'impression 3D, ledit polyester thermoplastique présentant des propriétés particulièrement intéressantes pour cette application.

### Technique antérieure

Le domaine de l'impression 3D est en plein essor depuis ces dernières années. A l'heure actuelle il est possible de réaliser des objets d'impression 3D dans une multitude de matières comme par exemple le plastique, la cire, le métal, le plâtre de Paris ou encore les céramiques.

Malgré cette variété de matières utilisables, le choix des composés à disposition au sein de chaque matière est parfois limité.

Concernant les objets d'impression 3D fabriqués en matières plastiques, peu de polymères peuvent être employés, notamment pour les bobines de filament utilisées dans certaines techniques d'impression 3D.

A l'heure actuelle, les polymères tels que l'ABS (acrylonitrile-butadiène-styrène) et le PLA (acide poly lactique) sont les principaux acteurs, auxquels viennent s'ajouter des polyamides et des photo-résines ou des photo-polymères.

L'ABS est un polymère amorphe dont la Tg évolue de 100 à 115°C selon sa composition et présente plusieurs limitations dans sa mise en forme. En effet, son utilisation requiert des températures de procédé relativement élevées de 220 à 240°C mais surtout une température de lit de 80°C à 110°C, ce qui requiert une instrumentation particulièrement adaptée. De plus, pour l'obtention d'objets massifs, l'utilisation d'ABS conduit dans tous les cas à des coulures et à des fissures apparentes sur l'objet final à cause d'un retrait très marqué.

Le PLA, seul ou éventuellement mélangé en général à des Polyhydroxyalcanoate, est moins exigeant au niveau des températures requises et l'une de ses caractéristiques principales réside dans son faible retrait à l'impression 3D, raison pour laquelle l'utilisation de plateau chauffant n'est pas nécessaire lors de l'impression 3D par la technique FDM (de l'anglais « Fused Deposition Modeling »). Cependant, sa principale limitation réside dans une faible température de transition vitreuse du mélange qui est de l'ordre de 60°C.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, ou le polybutylène téréphtalate (PBT), qui est un polyester comprenant des motifs butanediol et acide téréphtalique.

Par rapport au polyester PET, le PBT a une meilleure résistance au choc, en particulier à basses températures. Du fait de cette caractéristique, le plastique PBT est considérablement plus facile à modifier que le PET en utilisant des fibres, étant aussi généralement disponible comme produit renforcé.

Dans le cas où la technologie SLS (Selective Laser Sintering) est utilisée, les polymères disponibles sont également très réduits. Les polymères les plus adaptés sont semi-cristallins car le frittage résulte d'un processus de fusion/recristallisation et permet d'obtenir une très bonne cohésion de la matière. On retrouve majoritairement les polyamides (PA12, PA11) et quelques matières telles les polyuréthanes thermoplastiques (TPU), le polyéthercétone (PEK), le polyétheréthercétone (PEEK), le polyéther block amide (PEBA).

CN 106 866 948 A divulgue l'utilisation d'un polyester thermoplastique pour la fabrication d'objet d'impression 3D, ledit polyester comprenant un motif isosorbide (A); un motif butanediol (B); et un motif acide téréphtalique (C).

### Problème technique

Toutefois, pour certaines applications ou dans certaines conditions d'utilisation, il est nécessaire d'améliorer certaines propriétés et notamment la résistance au choc ou encore de tenue thermique.

Des PBT modifiés ont été développés en introduisant dans le polyester des motifs 1,4 : 3,6-dianhydrohexitol, notamment de l'isosorbide (PBIT). Les 1,4 : 3,6-dianhydrohexitols présentent l'avantage de pouvoir être obtenus à partir de ressources renouvelables telles que l'amidon.

Pour améliorer les propriétés de résistance au choc des polyesters, il est connu de l'art antérieur d'utiliser des polyesters dont on a réduit la cristallinité. Il s'agit donc d'obtenir des polymères dont on élimine la cristallinité par l'ajout de comonomères, et donc ici par l'ajout de 1,4-cyclohexanediméthanol.

En ce qui concerne les polyesters à base d'isosorbide, on peut citer la demande US2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées.

L'utilisation des copolyesters avec des propriétés thermiques améliorées et comportant obligatoirement un diol alicyclique, tel que le CHDM, de l'isosorbide et de l'acide téréphtalique pour des applications d'impression 3D a été décrite dans la demande WO2018020192. Un tel copolyester est exempt d'éthylène glycol ou tout autre diol linéaire aliphatique ou en contient une quantité résiduelle.

La demande WO 2018212596 décrit un mélange de polyesters utilisé pour la fabrication d'un filament d'impression 3D. Ce mélange est composé d'un polyester A contenant au moins de l'isosorbide et de l'acide téréphtalique et d'un polyester B contenant de l'acide téréphtalique et un diol autre que l'isosorbide. La fabrication d'un objet 3D avec un tel mélange impliquerait d'étapes supplémentaires d'homogénéisation des deux polyesters.

Il est donc du mérite de la demanderesse d'avoir trouvé que ce besoin de matières premières plastiques alternatives pour une utilisation en impression 3D pouvait être atteint, contre toute attente, avec un polyester thermoplastique à base de 1,4 : 3,6-dianhydrohexitol, notamment d'isosorbide, ne présentant pas ou très peu de motifs diol alicyclique, notamment de CHDM, alors qu'il était connu jusqu'à présent que ce dernier était indispensable pour obtenir des polymères dont la cristallinité est diminuée, voire éliminée, et présentant des bonnes propriétés thermiques et optiques.

### Résumé de l'invention

L'invention a ainsi pour objet l'utilisation d'un polyester thermoplastique pour la fabrication d'objet d'impression 3D, ledit polyester comprenant :
- au moins un motif 1,4 : 3,6-dianhydrohexitol (A) ;
- au moins un motif butanediol (B);
- au moins un motif acide téréphtalique (C) ;
dans lequel le ratio molaire (A)/[(A)+(B)] est d'au moins 0,01 et d'au plus 0,60 :
ledit polyester étant exempt de motifs diol alicyclique ou comprenant une quantité molaire de motifs diol alicyclique, par rapport à la totalité des motifs monomériques du polyester, inférieure à 5%, et dont la viscosité réduite en solution (35°C ; orthochlorophenol ; 5g/L de polyester) est supérieure à 40 mL/ g et inférieure à 120 mL/g.

Un second objet de l'invention concerne un objet d'impression 3D comprenant le polyester thermoplastique précédemment décrit.

Enfin, un troisième objet concerne un procédé de fabrication d'objet d'impression 3D à partir du polyester thermoplastique décrit ci-dessus, ledit procédé de fabrication comprenant les étapes suivantes de :
a) Fourniture d'un polyester thermoplastique comprenant au moins un motif 1,4 : 3,6-dianhydrohexitol (A), au moins un motif butanediol (B) autre que les motifs 1,4 : 3,6-dianhydrohexitol (A), au moins un motif acide téréphtalique (C), dans lequel le ratio molaire (A)/[(A)+(B)] est d'au moins 0,01 et d'au plus 0,60, ledit polyester étant exempt de motifs diol alicyclique ou comprenant une quantité molaire de motifs diol alicyclique, par rapport à la totalité des motifs monomériques du polyester, inférieure à 5%, et dont la viscosité réduite en solution (35°C ; orthochlorophenol ; 5g/L de polyester) est supérieure à 40 mL/g et inférieure à 120 mL/g.
b) Mise en forme du polyester thermoplastique obtenu à l'étape précédente,
c) Impression 3D d'un objet à partir du polyester thermoplastique mis en forme,
d) Récupération de l'objet d'impression 3D.

Les polyesters thermoplastiques utilisés selon la présente invention offrent d'excellentes propriétés et permettent de fabriquer des objets d'impression 3D.

La composition polymère intégrant un tel polyester thermoplastique est particulièrement avantageuse et présente des propriétés améliorées. En effet, la présence du polyester thermoplastique dans la composition permet d'apporter des propriétés supplémentaires et d'élargir les champs d'applications d'autres polymères.

Le polyester thermoplastique selon l'invention présente ainsi de très bonnes propriétés, notamment optiques et thermiques, et se trouve être particulièrement adapté pour une utilisation dans la fabrication d'objet d'impression 3D, sans pour autant que cette fabrication soit limitée par le procédé d'impression 3D utilisé.

### Exposé de l'invention

Un premier objet de l'invention concerne l'utilisation d'un polyester thermoplastique pour la fabrication d'objet d'impression 3D, ledit polyester comprenant :
- au moins un motif 1,4 : 3,6-dianhydrohexitol (A) ;
- au moins un motif butanediol (B);
- au moins un motif acide téréphtalique (C) ;
dans lequel le ratio (A)/[(A)+(B)] est d'au moins 0,01 et d'au plus 0,60 ;
ledit polyester étant exempt de motifs diol alicyclique ou comprenant une quantité molaire de motifs diol alicyclique, par rapport à la totalité des motifs monomériques du polyester, inférieure à 5%, et dont la viscosité réduite en solution (35°C ; orthochlorophenol ; 5g/L de polyester) est supérieure à 40 mL/ g et inférieure à 120 mL/g.

Ledit au moins un motif butanediol (B) peut être choisi parmi le 1,2-butanediol, le 1,3-butanediol, le 1,4-butanediol ou le 2,3-butanediol. De préférence, ledit au moins un motif butanediol (B) est du 1,4-butanediol. Dans un mode de réalisation particulier, ledit polyester comprend donc :
- au moins un motif 1,4 : 3,6-dianhydrohexitol (A) ;
- au moins un motif 1,4 butanediol (B);
- au moins un motif acide téréphtalique (C) ;
dans lequel le ratio (A)/[(A)+(B)] est d'au moins 0,01 et d'au plus 0,60 ;
ledit polyester étant exempt de motifs diol alicyclique ou comprenant une quantité molaire de motifs diol alicyclique, par rapport à la totalité des motifs monomériques du polyester, inférieure à 5%, et dont la viscosité réduite en solution (35°C ; orthochlorophenol ; 5g/L de polyester) est supérieure à 40 mL/ g et inférieure à 120 mL/g.

Par « ratio molaire (A)/[(A)+(B)] » on entend le ratio molaire motifs 1,4 : 3,6-dianhydrohexitol (A) / somme des motifs 1,4 : 3,6-dianhydrohexitol (A) et des motifs diols butanediol (B).

Le polyester thermoplastique est exempt de motifs diol alicyclique ou en comprend une faible quantité.

Par « faible quantité molaire de motifs diol alicyclique », on entend notamment une quantité molaire de motifs diol alicyclique inférieure à 5%. Selon l'invention, cette quantité molaire représente le rapport de la somme des motifs diol alicyclique, ces motifs pouvant être identiques ou différents, par rapport à la totalité des motifs monomériques du polyester.

Le diol alicyclique est également appelé diol aliphatique et cyclique. Il s'agit d'un diol qui peut notamment. Très préférentiellement le diol alicyclique est le 1,4-cyclohexanedimethanol. Le diol alicyclique (B) peut être dans la configuration cis, dans la configuration *trans* ou peut être un mélange de diols en configuration cis et *trans.*

Le polyester peut être exempt de motif diol alicyclique ou comprend une quantité molaire de motifs diol alicyclique, par rapport à la totalité des motifs monomériques du polyester, inférieure à 1%, de préférence le polyester est exempt de motif diol alicyclique.

Ainsi, la quantité molaire de motif diol alicyclique pouvant être choisi parmi le 1,4-cyclohexanedimethanol, le 1,2-cyclohexanedimethanol, le 1,3-cyclohexanedimethanol ou un mélange de ceux-ci est avantageusement inférieure à 1%. De préférence, le polyester est exempt de motif diol alicyclique pouvant être choisi parmi le 1,4-cyclohexanedimethanol, le 1,2-cyclohexanedimethanol, le 1,3-cyclohexanedimethanol ou un mélange de ceux-ci. Plus préférentiellement, il est exempt de 1,4-cyclohexanedimethanol.

Malgré la faible quantité de diol alicyclique, et donc de 1,4-cyclohexanedimethanol, utilisé pour la synthèse, il est obtenu de manière surprenante un polyester thermoplastique présentant une viscosité réduite en solution élevée et dans lequel il est possible de contrôler la quantité d'isosorbide incorporée. Ainsi, en fonction du taux d'incorporation de l'isosorbide, il est possible d'obtenir des copolyesters amorphes ou semi-cristallins et d'élargir la gamme de propriété accessible aux objets imprimés en 3D obtenus au travers de différents procédés de fabrication, que ce soit pas impression filamentaire ou par SLS.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

Par motif « butanediol » on comprend les diols choisis parmi le 1,2-butanediol, le 1,3-butanediol, le 1,4-butanediol ou le 2,3-butanediol. De préférence, le motif butanediol employé est le 1,4-butanediol.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®}.

Le ratio molaire motifs 1,4 : 3,6-dianhydrohexitol (A) / somme des motifs 1,4 : 3,6-dianhydrohexitol (A) et des motifs diols butanediol (B) soit (A)/[(A)+(B)], est d'au moins 0,01 et d'au plus 0,60. Lorsque le ratio molaire (A)/(B) est inférieur à 0,30, le polyester thermoplastique est semi-cristallin et se caractérise par la présence d'une phase cristalline se traduisant par la présence de raie de diffraction aux rayons X et la présence d'un pic de fusion endothermique en analyse calorimétrique différentielle à balayage (DSC).

Par contre, lorsque le ratio molaire (A)/[(A)+(B)], est supérieur à 0,30, le polyester thermoplastique est amorphe et se caractérise par une absence de raies de diffraction aux rayons X et par une absence d'un pic de fusion endothermique en analyse calorimétrique différentielle à balayage (DSC).

Un polyester thermoplastique particulièrement adapté pour la fabrication d'objet d'impression 3D comprend :
- une quantité molaire de motifs 1,4 : 3,6-dianhydrohexitol (A) allant de 0.5 à 33 % mol ;
- une quantité molaire de motifs butanediol (B) allant de 18 à 54.5 % mol ;
- une quantité molaire de motifs acide téréphtalique (C) allant de 45 à 55 % mol.

En fonction des applications et des propriétés recherchées concernant l'objet d'impression 3D, le polyester thermoplastique peut être un polyester thermoplastique semi-cristallin ou un polyester thermoplastique amorphe.

Par exemple, si pour certaines applications on cherche à obtenir un objet pouvant être opaque et présentant des propriétés mécaniques augmentées, le polyester thermoplastique peut être semi-cristallin et comprend ainsi :
- une quantité molaire de motifs 1,4 : 3,6-dianhydrohexitol (A) allant de 0,5 à 16.5 % mol ;
- une quantité molaire de motifs butanediol (B) allant de 31.5 à 54.5 % mol ;
- une quantité molaire de motifs acide téréphtalique (C) allant de 45 à 55 % mol.

D'une manière avantageuse, lorsque le polyester thermoplastique est semi-cristallin il présente un ratio molaire (A)/(B) de 0,01 à 0,30.

Au contraire, lorsque la transparence de l'objet est recherchée le polyester thermoplastique peut être amorphe et comprend ainsi :
- une quantité molaire de motifs 1,4 : 3,6-dianhydrohexitol (A) allant de 13.5 à 33 % mol ;
- une quantité molaire de motifs butanediol allant de 18 à 38.5 % mol ;
- une quantité molaire de motifs acide téréphtalique (C) allant de 45 à 55 % mol.

D'une manière avantageuse, lorsque le polyester thermoplastique est amorphe il présente un ratio molaire (A)/(B) de 0,30 à 0,60.

L'homme de l'art peut aisément trouver les conditions d'analyse pour déterminer les quantités en chacun des motifs du polyester thermoplastique. Par exemple, à partir d'un spectre RMN d'un poly(butylène-co-isosorbide téréphtalate), les déplacements chimiques relatifs au butanediol sont compris entre 1,5 et 2,0 ppm et entre 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques présentent une température de transition vitreuse allant de 30 à 130°C, par exemple de 30 à 80°C s'ils sont semi-cristallins et par exemple de 80°C à 130 °C s'ils sont amorphes.

Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Les polyesters thermoplastiques utilisés selon l'invention, lorsqu'ils sont semi-cristallins, présentent une température de fusion allant de 165 à 225°C, par exemple de 175 à 215 °C.

Avantageusement, lorsque le polyester thermoplastique est semi-cristallin il présente une chaleur de fusion supérieure à 20 J/g, de préférence supérieure à 30 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10°C/min.

Le polyester thermoplastique de la composition polymère selon l'invention présente notamment une clarté L* supérieure à 45. Avantageusement, la clarté L* est supérieure à 50, de préférence supérieure à 55, tout préférentiellement supérieure à 60, par exemple supérieure à 62. Le paramètre L* peut être déterminé à l'aide d'un spectrophotomètre, en utilisant le modèle CIE Lab.

Enfin, la viscosité réduite en solution dudit polyester thermoplastique utilisé selon l'invention est supérieure à 40 mL/g et inférieure à 120 mL/g, cette viscosité pouvant être mesurée à l'aide d'un viscosimètre capillaire Ubbelohde à 35°C dans de l'orthochlorophenol après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

D'une manière avantageuse, lorsque le polyester thermoplastique est semi-cristallin il possède une viscosité réduite en solution supérieure à 40 mL/g et inférieure à 120 mL/g et lorsque le polyester thermoplastique est amorphe, il possède une viscosité réduite en solution de 50 à 90 mL/g.

Le caractère semi-cristallin ou amorphe des polyesters thermoplastiques utilisés selon la présente invention se caractérise, après un traitement thermique de 16h à 170°C, par la présence ou non de raies de diffraction aux rayons X ou d'un pic de fusion endothermique en Analyse Calorimétrique Différentielle à Balayage (DSC). Ainsi, lorsqu'il y a la présence de raies de diffraction aux rayons X et d'un pic de fusion endothermique en Analyse Calorimétrique Différentielle à Balayage (DSC), le polyester thermoplastique est semi-cristallin, le cas contraire, il est amorphe.

Selon un mode de réalisation particulier, un ou plusieurs polymères additionnels peuvent être utilisés en mélange avec le polyester thermoplastique pour la fabrication d'objet en impression 3D.

Le polymère additionnel peut être choisi parmi les polyamides, les photos résines, les photo polymères, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

Le polymère additionnel peut également être un polymère permettant d'améliorer les propriétés au choc du polyester, notamment les polyoléfines fonctionnelles telles que les polymères et copolymères d'éthylène ou de propylène fonctionnalisés, des copolymères cœur-écorce ou des copolymères à bloc.

En particulier, l'objet d'impression 3D comprend un mélange polymérique constitué dudit polyester thermoplastique et d'un ou plusieurs polymères additionnels, ledit mélange comprenant au moins30 % en poids de polyester thermoplastique par rapport au poids total dudit mélange, de préférence ledit un ou plusieurs polymères additionnels étant choisis parmi des polyesters, tels que le polybutylene terephtalate (PBT), l'acide polylactique (PLA), le polybutylene succinate (PBS), le polybutylene succinate adipate (PBSA), le polyéthylène terephtalate PET, le polyéthylène terephtalate glycolisé (PETg), des polycarbonates (PC), des polyamides (PA), l'acrylonitrile butadiène styrène (ABS), des polyurethanes thermoplastiques (TPU), le polyétheréthercétone (PEEK), des polyacrylates.

Lorsqu'un polymère additionnel est utilisé, ce dernier peut par exemple être ajouté au moment de la mise en forme du polyester thermoplastique pour l'impression 3D ou au moment de la préparation du polyester thermoplastique.

Un ou plusieurs additifs peuvent également être ajoutés au polyester thermoplastique lors de la fabrication d'objet en impression 3D afin de lui conférer des propriétés particulières.

Ainsi, à titre d'exemple d'additif, on peut citer les charges ou les fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou l'aspect de surface des pièces imprimées.

L'additif peut également être choisi parmi des agents opacifiants, des colorants et des pigments. Ils peuvent être choisis parmi l'acétate de cobalt et les composés suivants : HS-325 Sandoplast^{®} RED BB (qui est un composé porteur d'une fonction azo également connu sous le nom Solvent Red 195), HS-510 Sandoplast^{®} Blue 2B qui est une anthraquinone, Polysynthren^{®} Blue R, et Clariant^{®} RSB Violet.

L'additif peut être également un agent de résistance aux UV comme par exemple des molécules type benzophénone ou benzotriazole, comme la gamme Tinuvin^{™} de BASF : tinuvin 326, tinuvin P ou le tinuvin 234 par exemple ou des amines encombrées comme la gamme Chimassorb^{™} de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit^{®} OP) ou comme la gamme des cyanurates mélaminés (par exemple les melapur^{™} : mélapur 200) ou encore des hydroxydes d'aluminium ou de magnésium.

Enfin, l'additif peut également être un agent antistatique ou encore un agent anti-block tel que des dérivés de molécules hydrophobes par exemple les Incroslip^{™} ou Incromol^{™} de Croda.

Le polyester thermoplastique selon l'invention est donc utilisé pour la fabrication d'objet d'impression 3D.

L'objet d'impression 3D peut être réalisé selon les techniques d'impression 3D connues de l'homme du métier.

Par exemple, l'impression 3D peut être mise en œuvre par dépôt de matière fondue (en anglais « Fused Deposition Modeling » ou FDM) ou par frittage sélectif par laser. D'une manière préférentielle, l'impression 3D est réalisée par dépôt de matière fondue.

L'impression 3D par dépôt de matière fondue consiste notamment à extruder un fil de matière en polymère thermoplastique sur une plateforme à travers une buse se déplaçant sur les 3 axes x, y et z. La plateforme descend d'un niveau à chaque nouvelle couche appliquée, jusqu'à l'impression de l'objet terminée.

L'homme du métier pourra ainsi aisément adapter la mise en forme du polyester thermoplastique selon l'invention afin que ce dernier puisse être utilisé selon l'une quelconque des méthodes d'impression 3D.

Le polyester thermoplastique peut être sous forme de fil, de filament, de jonc, de granulés, de pellets ou encore de poudre. Par exemple pour une impression 3D par dépôt de matière fondue, le polyester thermoplastique peut être sous forme de jonc ou de fil, préférentiellement sous forme de fil, avant d'être refroidi puis bobiné. La bobine de fil ainsi obtenue peut être ainsi utilisée dans une machine d'impression 3D pour la fabrication d'objets. Autre exemple, pour une impression 3D par frittage sélectif par laser, le polyester thermoplastique peut être sous forme de poudre.

D'une manière préférentielle, lorsque la fabrication de l'objet selon l'invention est réalisée en impression 3D par dépôt de matière fondue, les caractéristiques utilisées pour l'impression 3D peuvent être optimisées en fonction du caractère semi-cristallin ou amorphe du polyester thermoplastique.

Ainsi, lors d'une impression 3D par dépôt de matière fondue, lorsque le polyester thermoplastique est semi-cristallin, la température de la buse d'impression est préférentiellement comprise de 230°C à 270°C et le lit peut être ou non chauffé avec une température jusqu'à 55°C maximum. Lorsque le polyester thermoplastique est amorphe, la température de la buse d'impression est préférentiellement comprise de 200°C à 230°C et le lit est non chauffé .

Selon un mode de réalisation particulier, lorsque la fabrication de l'objet est réalisée par impression 3D par dépôt de matière fondue à partir d'un polyester thermoplastique semi-cristallin, ledit objet peut être recristallisé afin de le rendre opaque et d'améliorer les propriétés mécaniques, notamment la résistance à l'impact. La recristallisation peut être par réalisée à une température de 80°C à 150°C, préférentiellement de 100°C à 145°C comme par exemple 140°C, pendant une durée de 3h à 5h, préférentiellement de 3h30 à 4h30, comme par exemple 4h.

Le polyester thermoplastique tel que précédemment défini présente bien des avantages pour la fabrication d'objet d'impression 3D.

En effet, grâce notamment au ratio molaire motifs 1,4 : 3,6-dianhydrohexitol (A) / somme des motifs 1,4 : 3,6-dianhydrohexitol (A) et des motifs butanediol (B) d'au moins 0.01 et à une viscosité réduite en solution supérieure à 40 mL/g et inférieure à 120 mL/g, les polyesters thermoplastiques permettent d'obtenir des objets d'impression 3D qui ne fluent pas, qui ne se fissure pas et qui présentent de bonnes propriétés mécaniques notamment au niveau de la résistance à l'impact.

Plus particulièrement, lorsque le polyester thermoplastique est un polyester thermoplastique amorphe il présente une température de transition vitreuse plus élevée que les polymères classiquement utilisés pour la fabrication d'objet d'impression 3D, ce qui permet d'améliorer la résistance thermique des objets obtenus.

Ensuite, lorsque le polyester thermoplastique utilisé pour la fabrication d'objet d'impression 3D est un polyester thermoplastique semi-cristallin, l'objet d'impression 3D possède assez de cristaux pour être physiquement solide et stable. Le polyester thermoplastique semi-cristallin présente alors avantageusement, via une recristallisation par un chauffage ultérieur, la possibilité d'augmenter son taux de cristallinité, ce qui permet d'améliorer ses propriétés mécaniques dont la tenue à l'impact.

Enfin, les polyesters thermoplastiques selon l'invention sont avantageux car ils permettent, lorsqu'ils sont mélangés aux polymères usuels utilisés pour la fabrication d'objet d'impression 3D tels qu'un polyamide, une photo résine ou un photo polymère, d'élargir la gamme des propriétés accessibles aux objets d'impression 3D.

Un second objet de l'invention concerne un procédé de fabrication d'objet d'impression 3D, ledit procédé comprenant les étapes suivantes de :
a) Fourniture d'un polyester thermoplastique tel que défini ci-dessus,
b) Mise en forme du polyester thermoplastique obtenu à l'étape précédente,
c) Impression 3D d'un objet à partir du polyester thermoplastique mis en forme,
d) Récupération de l'objet d'impression 3D.

La mise en forme de l'étape b) est adaptée par l'homme du métier en fonction de la méthode l'impression 3D mise en œuvre à l'étape c).

Le polyester thermoplastique peut ainsi être mis sous la forme de fil, de filament, de jonc, de granulés, de pellets ou encore de poudre. Par exemple, si l'impression 3D est réalisée par dépôt de matière fondue, la mise en forme est avantageusement un fil et notamment un fil bobiné. La bobine de fil peut être obtenue à partir d'une extrusion du polyester thermoplastique sous forme de fil, ledit fil étant ensuite refroidi et bobiné.

L'impression 3D peut être réalisée selon les techniques connues de l'homme du métier. Par exemple, l'étape d'impression 3D peut être réalisée par dépôt de matière fondue.

Selon une alternative, lorsque le polyester fourni est un polyester thermoplastique semi-cristallin, le procédé selon l'invention peut en outre comprendre une étape e) supplémentaire de recristallisation. Cette étape de recristallisation permet notamment de rendre l'objet d'impression 3D opaque et d'améliorer ses propriétés mécaniques telles que la résistance à l'impact. L'étape de recristallisation peut être par réalisée à une température de 80°C à 150°C, préférentiellement de 100°C à 145°C comme par exemple 140°C, pendant une durée de 3h à 5h, préférentiellement de 3h30 à 4h30, comme par exemple 4h.

Un troisième objet de l'invention concerne un objet d'impression 3D fabriqué à partir du polyester thermoplastique décrit précédemment. L'objet d'impression 3D peut également comprendre un ou plusieurs polymères additionnels ainsi qu'un ou plusieurs additifs.

Le polyester thermoplastique particulièrement adapté pour l'obtention d'une composition polymérique peut être préparé par un procédé de synthèse comprenant :
- une étape d'introduction dans un réacteur de monomères comprenant au moins un 1,4 : 3,6-dianhydrohexitol (A), au moins un butanediol (B) et au moins un acide téréphtalique (C), le ratio molaire ((A)+(B))/(C) allant de 1,05 à 1,5, lesdits monomères étant exempts de diol alicyclique ou comprenant, par rapport à la totalité des monomères introduits, une quantité molaire de motifs diol alicyclique inférieure à 5% ;
- une étape d'introduction dans le réacteur d'un système catalytique ;
- une étape de polymérisation desdits monomères pour former le polyester, ladite étape consistant en :
   • un premier stade d'oligomérisation pendant lequel le milieu réactionnel est agité sous atmosphère inerte à une température allant de 210 à 255°C, avantageusement de 215 à 245 °C, par exemple 225°C;
   • un second stade de condensation des oligomères pendant lequel les oligomères formés sont agités sous vide à une température allant de 235 à 280°C, avantageusement de 240 à 270°C, par exemple 250°C;
- une étape de récupération du polyester thermoplastique.

Ledit au moins un butanediol (B) peut être choisi parmi le 1,2-butanediol, le 1,3-butanediol, le 1,4-butanediol ou le 2,3-butanediol. De préférence, ledit au moins un butanediol (B) est du 1,4-butanediol. Dans un mode de réalisation particulier, le procédé comprend une étape d'introduction dans un réacteur de monomères comprenant au moins un 1,4 : 3,6-dianhydrohexitol (A), au moins un 1,4-butanediol (B) et au moins un acide téréphtalique (C), le ratio molaire ((A)+(B))/(C) allant de 1,05 à 1,5, lesdits monomères étant exempts de diol alicyclique ou comprenant, par rapport à la totalité des monomères introduits, une quantité molaire de motifs diol alicyclique inférieure à 5%.

Lorsque le polymère est semi-cristallin, le procédé peut comprendre en outre :
- optionnellement, une étape de post condensation à l'état solide
- une étape de cristallisation du polymère sous atmosphère inerte de préférence entre 80 et 150°C,
- une étape de post-condensation à l'état solide sous vide ou flux d'un gaz inerte de préférence entre 150 et 220°C.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 1,05 et 6 bars, tout préférentiellement de 1,5 à 5 bars, par exemple 2,5 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité pour l'obtention de la composition polymère.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US2011282020A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un antioxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox^{®} 0 3, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010, Irganox^{®} 1076 ou un phosphonate tel que l'Irgamod^{®} 195. L'anti-oxydant secondaire peut être des composés phosphorés trivalents tels que Ultranox^{®} 626, Doverphos^{®} S-9228, Hostanox^{®} P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé comprend une étape de récupération du polyester à l'issue de l'étape de polymérisation. Le polyester thermoplastique ainsi récupéré peut ensuite être conditionné sous une forme facilement manipulable telle que des pellets ou des granulés avant d'être mis de nouveau en forme pour les besoins de l'impression 3D.

Selon une variante du procédé de synthèse, lorsque le polyester thermoplastique est semi-cristallin, une étape d'augmentation de masse molaire peut être réalisée après l'étape de récupération du polyester thermoplastique.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante du procédé de fabrication, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 20 J/g, de préférence supérieure à 30 J/g, la mesure de cette chaleur de fusion consistant à faire subir à un échantillon de ce polymère de viscosité réduite en solution plus faible un traitement thermique à 170°C pendant 16 heures puis à évaluer la chaleur de fusion par DSC en chauffant l'échantillon à 10 K/min.

Avantageusement, l'étape de PCS est réalisée à une température allant de 150 à 220°C, de préférence allant de 160 à 210°C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante du procédé de fabrication, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être à supérieure à la température de fusion du polymère. La température à l'intérieur de l'extrudeuse peut aller de 150 à 320°C.

Le polyester thermoplastique semi-cristallin obtenu après l'étape d'augmentation de masse molaire est récupéré et peut ensuite être conditionné sous une forme facilement manipulable telle que des pellets ou des granulés avant d'être mis de nouveau en forme pour les besoins de l'impression 3D.

L'invention sera mieux comprise à l'aide des exemples et figures ci-après qui se veulent purement illustratifs et ne limitent en rien la portée de la protection.

### Exemples

Les propriétés des polymères ont été étudiées avec les techniques suivantes :

### Viscosité réduite en solution

La viscosité réduite en solution est évaluée à l'aide d'un viscosimètre capillaire Ubbelohde à 35°C dans de l'orthochlorophenol après dissolution du polymère à 130°C sous agitation, la concentration de polymère introduit étant de 5g/L.

### DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 300°C (10°C.min-1), refroidi à 10°C (10°C.min-1) puis réchauffé à 300°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage.

De même la détermination de l'enthalpie de fusion (aire sous la courbe) est réalisée au premier chauffage.

Pour les exemples illustratifs présentés ci-dessous les réactifs suivants ont été utilisés :
1,4-Butanediol (Sigma Aldrich) >99%
Isosorbide (pureté >99,5%) Polysorb^{®} P de Roquette Frères
Dimethyl téréphtalate (pureté 99+%) de Acros
Hostanox PEPQ de Clariant
Irganox^{®} 1010 de BASF AG (entaerythritol tetrakis[3-[3,5-di-tert-butyl-4-hydroxyphenyl]propionate)
Tetrabutoxyde de titane (Sigma Aldrich) >97%

### Exemple 1: Utilisation d'un polyester thermoplastique semi-cristallin pour la fabrication d'un objet d'impression 3D.

Un polyester thermoplastique semi-cristallin **P1** est préparé pour une utilisation selon l'invention en impression 3D.

### A : Polymérisation

Dans un réacteur de 50 L sont ajoutés 10,154 kg (112,8 mol) de 1,4-butanediol, 1,826 kg (12,5 mol) d'isosorbide, 18,7 kg (96,4 mol) de dimethyl téréphtalate, 9,5 g d'Irganox 1010 (antioxydant), 9,5 g Hostanox PEPQ (antioxydant) et 22,59 g de tetrabutoxyde de titane (catalyseur). Pour extraire l'oxygène résiduel des cristaux d'isosorbide, 4 cycles vide-azote sont effectués une fois la température du milieu réactionnel comprise entre 60 et 80°C.

Le mélange réactionnel est ensuite chauffé à 225°C en 105 minutes sous 1,5 bars de pression et sous agitation constante (150 tr/min). Le taux d'estérification est estimé à partir de la quantité de distillat collectée. Puis, la pression est réduite à 1 mbar en 60 minutes selon une rampe logarithmique et la température amenée à 250°C.

Ces conditions de basse pression et de température ont été maintenues jusqu'à la valeur de couple souhaitée.

Enfin, un jonc de polymère est coulé par la vanne de fond du réacteur, refroidi dans un bac d'eau thermo-régulé à 15°C et découpé sous forme de granulés **G1** d'environ 15 mg.

En utilisant un tel procédé permet d'éviter le contact entre le polymère chauffé avec l'oxygène, de manière à réduire la coloration et la dégradation thermo-oxydative.

La résine ainsi obtenue a une viscosité réduite en solution de 81 mL/g.

L'analyse par RMN ¹H du polyester **P1** montre qu'il contient 6.4 % mol d'isosorbide par rapport aux diols.

En ce qui concerne les propriétés thermiques, le polyester **P1** présente une température de transition vitreuse de 49°C et une température de fusion de 215°C avec une enthalpie de fusion de 45 J/g.

Les granulés ainsi obtenus sont soumis à un traitement de de post condensation à l'état solide suivant le protocole suivant : 10 kg de granulés du polymère précédent sont introduit dans un rotavapor de 50L. L'huile du bain est ensuite rapidement portée à 120°C puis est progressivement chauffée à 145°C jusqu'à obtenir une cristallisation optimale des granulés. Cette étape est réalisée sous un flux d'azote au débit 3,3 L/min. Ensuite le ballon est chauffé à 205°C sous un flux d'azote de 3,3 L/min jusqu'à l'obtention d'un IV de 120.4 mL/g.

### B : Extrusion des granulés pour former un jonc

Les granulés **G1** obtenus à l'étape précédente sont séchés sous vide à 120°C afin d'atteindre des taux d'humidité résiduelle inférieurs à 100 ppm. Pour cet exemple, la teneur en eau des granulés est de 92 ppm.

L'extrusion du jonc/fil est réalisée sur une extrudeuse Collin équipée d'une filière deux trous de 2 mm de diamètre chacun, l'ensemble est complété par un conformateur refroidi et un bain de refroidissement à l'eau.

Les paramètres d'extrusion sont regroupés dans le tableau 1 ci -dessous :

**[Tableau 1]**

| Paramètres | Unités | Valeurs |
|---|---|---|
| Température (alim -> filière) : | °C | 230/240/250/260/260 |
| Vitesse de rotation de la vis | rpm | 80 |

En sortie d'extrudeuse, le fil obtenu présente un diamètre de 1,75 mm. Il est ensuite séché en surface après refroidissement par un flux d'air chaud à 30°C puis bobiné.

### C : Mise en forme d'un objet d'impression 3D par dépôt de matière fondue

La bobine est installée sur une machine d'impression 3D Stream 20 Pro de la société Volumic.

La température de la buse est fixée à 260°C et le lit est chauffé à 45°C.

L'objet d'impression obtenu est un polyèdre en 3D formé de plusieurs pentaèdres plans reliés entre eux par les arêtes.

L'observation visuelle permet de constater que l'objet réalisé ne présente aucun fluage ni aucune fissure. De plus, l'objet obtenu est transparent et présente également une bonne finition de surface.

Ainsi, le polyester thermoplastique amorphe selon l'invention est particulièrement adapté pour la fabrication d'objet en impression.

### Exemple 2 : Utilisation d'un polyester thermoplastique amorphe pour la fabrication d'un objet d'impression 3D.

Un polyester thermoplastique amorphe P2 est préparé pour une utilisation selon l'invention en impression 3D.

### A: polymérisation

Dans un réacteur de 50 L sont ajoutés 5,64 kg (62,6 mol) de 1,4-butanediol, 9,149 kg (62,6 mol) d'isosorbide, 18,7 kg (96,4 mol) de dimethyl téréphtalate, 9,5 g d'Irganox 1010 (antioxydant), 9,5 g Hostanox PEPQ (antioxydant) et 29,43 g de tetrabutoxyde de titane (catalyseur). Pour extraire l'oxygène résiduel des cristaux d'isosorbide, 4 cycles vide-azote sont effectués une fois la température du milieu réactionnel comprise entre 60 et 80°C.

Le mélange réactionnel est ensuite chauffé à 225°C en 105 minutes sous 1,5 bars de pression et sous agitation constante (150 tr/min). Le taux d'estérification est estimé à partir de la quantité de distillat collectée. Puis, la pression est réduite à 1 mbar en 60 minutes selon une rampe logarithmique et la température amenée à 250°C.

Ces conditions de basse pression et de température ont été maintenues jusqu'à obtenir la valeur de couple souhaitée.

Enfin, un jonc de polymère est coulé par la vanne de fond du réacteur, refroidi dans un bac d'eau thermo-régulé à 15°C et découpé sous forme de granulés **G2** d'environ15mg.

En utilisant un tel procédé permet d'éviter le contact entre le polymère chauffé avec l'oxygène, de manière à réduire la coloration et la dégradation thermo-oxydative.

La résine ainsi obtenue a une viscosité réduite en solution de 61 mL/g.

L'analyse par RMN ¹H du polyester **P2** montre qu'il contient 34.1 % mol d'isosorbide par rapport aux diols.

En ce qui concerne les propriétés thermiques (relevées au second chauffage), le polyester **P2** présente une température de transition vitreuse de 84.1°C.

### B : Extrusion des granulés pour former un jonc

Les granulés **G2** obtenus à l'étape précédente sont séchés sous vide à 120°C afin d'atteindre des taux d'humidité résiduelle inférieurs à 150 ppm. Pour cet exemple, la teneur en eau des granulés est de 115 ppm.

L'extrusion du jonc/fil est réalisée sur une extrudeuse Collin équipée d'une filière deux trous de 2 mm de diamètre chacun, l'ensemble est complété par un conformateur refroidi et un bain de refroidissement à l'eau.

Les paramètres d'extrusion sont regroupés dans le tableau 2 ci -dessous :

**[Tableau 2]**

| Paramètres | Unités | Valeurs |
|---|---|---|
| Température (alim -> filière) : | °C | 210/220/230/240/240 |
| Vitesse de rotation de la vis | rpm | 80 |

En sortie d'extrudeuse, le fil obtenu présente un diamètre de 1,75 mm. Il est ensuite séché en surface après refroidissement par un flux d'air chaud à 30°C puis bobiné.

### C : Mise en forme d'un objet d'impression 3D par dépôt de matière fondue

La bobine est installée sur une machine d'impression 3D Stream 20 Pro de la société Volumic.

La température de la buse est fixée à 230°C et le lit est chauffé à 45°C.

L'objet d'impression obtenu est un polyèdre en 3D formé de plusieurs pentaèdres plans reliés entre eux par les arêtes.

L'observation visuelle permet de constater que l'objet réalisé ne présente aucun fluage ni aucune fissure. De plus, l'objet obtenu est transparent et présente également une bonne finition de surface.

Ainsi, le polyester thermoplastique amorphe selon l'invention est particulièrement adapté pour la fabrication d'objet en impression.

### Exemple 3 : Utilisation d'un polyester thermoplastique semi-cristallin pour la fabrication d'un objet d'impression 3D.

Un polyester thermoplastique semi-cristallin P3 est préparé pour une utilisation selon l'invention en impression 3D.

### A : polymérisation

Dans un réacteur de 50 L sont ajoutés 7,89kg (87,7 mol) de 1,4-butanediol, 5,49 kg (37,59 mol) d'isosorbide, 18,7 kg (96,4 mol) de dimethyl téréphtalate, 9,5 g d'Irganox 1010 (antioxydant), 9,5 g Hostanox PEPQ (antioxydant) et 29,43 g de tetrabutoxyde de titane (catalyseur). Pour extraire l'oxygène résiduel des cristaux d'isosorbide, 4 cycles vide-azote sont effectués une fois la température du milieu réactionnel comprise entre 60 et 80°C.

Le mélange réactionnel est ensuite chauffé à 225°C en 105 minutes sous 1,5 bars de pression et sous agitation constante (150 tr/min). Le taux d'estérification est estimé à partir de la quantité de distillat collectée. Puis, la pression est réduite à 1 mbar en 60 minutes selon une rampe logarithmique et la température amenée à 250°C.

Ces conditions de basse pression et de température ont été maintenues jusqu'à la valeur de couple souhaitée.

Enfin, un jonc de polymère est coulé par la vanne de fond du réacteur, refroidi dans un bac d'eau thermo-régulé à 15°C et découpé sous forme de granulés **G3** d'environ 15 mg.

En utilisant un tel procédé permet d'éviter le contact entre le polymère chauffé avec l'oxygène, de manière à réduire la coloration et la dégradation thermo-oxydative.

La résine ainsi obtenue a une viscosité réduite en solution de 66 mL/g.

L'analyse par RMN ¹H du polyester **P3** montre qu'il contient 21 % mol d'isosorbide par rapport aux diols.

En ce qui concerne les propriétés thermiques (relevées au second chauffage), le polyester **P3** présente une température de transition vitreuse de 66°C, une température de fusion de 185°C et une température de cristallisation de 109°C.

Les granulés ainsi obtenus sont soumis à un traitement de de post condensation à l'état solide suivant le protocole suivant : 10 kg de granulés du polymère précédent sont introduit dans un rotavapor de 50L. L'huile du bain est ensuite rapidement portée à 120°C puis est progressivement chauffée à 145°C jusqu'à obtenir une cristallisation optimale des granulés. Cette étape est réalisée sous un flux d'azote au débit 3,3 L/min. Ensuite le ballon est chauffé à 175°C sous un flux d'azote de 3,3 L/min jusqu'à l'obtention d'un IV de 75 mL/g.

### B : Fabrication d'un objet d'impression 3D par SLS

Le broyage est réalisé avec un cryo-broyeur afin d'atteindre une taille de particule comprise entre 50 µm et 100 µm.

L'imprimante utilisée est le modèle SnowWhite de la marque Sharebot.

La température de la chambre a été fixée à 100°C pour la chambre et 150°C pour la surface (lit de poudre).

La puissance laser était de de 8W et la vitesse de balayage de 800 mm/s. Sous le passage du laser, la matière fond complètement et la cohésion entre les couches est très bonne.

Les pièces ainsi obtenues ont une excellente résistance au choc et une excellente stabilité dimensionnelle.

### Exemple 4 : Propriétés mécaniques des polyesters thermoplastiques amorphe et semi-cristallin pour la fabrication d'un objet d'impression 3D.

Les propriétés mécaniques des polyesters exempts d'isosorbide ou contenant 4 % mol et 21 % mol, respectivement, d'isosorbide par rapport aux diols ont été évaluées. Les valeurs de choc Charpy à 23 °C et à -30 °C ont été évaluées et sont regroupées dans le tableau 3 ci-dessous. Ces tests ont été réalisés à l'aide d'un mouton pendule de la parque CEAST, modèle 9050 en suivant la norme ISO 179.

**[Tableau 3]**

| Echantillon | Choc Charpy (barreaux entaillés) à 23°C - kJ/m² | Choc Charpy (barreaux entaillés) |
|---|---|---|
| | | A froid (-30°C) - kJ/m² |
| Polybutylènetéréphtalate (PBT) | 4 | 3 |
| Poly(butylène-co-isosorbide)téréphthalate contenant 4% mol d'isosorbide par rapport aux diols (PBI4T) | 5 | 4 |
| Poly(butylène-co-isosorbide)téréphthalate contenant 21 % mol d'isosorbide par rapport aux diols (PBI21T) | 160 | 13 |

### Exemple 5: Propriétés thermiques des polyesters thermoplastiques amorphe et semi-cristallin pour la fabrication d'un objet d'impression 3D.

Les propriétés thermiques des polyesters contenant 4% mol, 6 % mol, 13 % mol et 21 % mol, respectivement, d'isosorbide par rapport aux diols ont été évaluées en DSC. Les températures de transition vitreuse (Tg), de cristallisation (Tc) et de fusion ont été analysées et sont regroupées dans le tableau 4 ci-dessous.

**[Tableau 4]**

| Echantillon | Tg (°C) | Tc (°C) | Tf (°C) |
|---|---|---|---|
| PBI4T | 47 | 162 | 220 |
| PBI6T | 49 | 163 | 220 |
| PBI13T | 58 | 113 | 200 |
| PBI21T | 61 | 109 | 185 |

La température de cristallisation est mesurée en DSC lors du refroidissement car après fusion de la poudre par le laser, la matière refroidit et la cristallisation permet d'avoir une bonne cohésion de la pièce.

Dans le cas d'une impression la technique de dépôt de matière fondue, les matières utilisées peuvent être amorphes ou semi-cristallines.

Dans le cas d'une impression la technique du frittage sélectif par laser (SLS), les matières utilisées doivent être semi-cristallines et disponibles sous forme de poudre. De plus, les températures de fusion et de cristallisation ne doivent pas être trop importantes dans la mesure où les machines employées généralement travaillent à une température inférieure à 200°C. Les deux pics de cristallisation et fusion doivent être bien distincts pour avoir une fenêtre de frittage suffisamment grande. Ainsi, les PBIT sont adaptés à cette technologie.

## Revendications

1. Utilisation d'un polyester thermoplastique pour la fabrication d'objet d'impression 3D, ledit polyester comprenant :
• au moins un motif 1,4 : 3,6-dianhydrohexitol (A) ;
• au moins un motif butanediol (B);
• au moins un motif acide téréphtalique (C) ;
dans lequel le ratio molaire (A)/[(A)+(B)] est d'au moins 0.01 et d'au plus 0.60 :
ledit polyester étant exempt de motifs diol alicyclique ou comprenant une quantité molaire de motifs diol alicyclique, par rapport à la totalité des motifs monomériques du polyester, inférieure à 5%, et dont la viscosité réduite en solution (35°C ; orthochlorophenol ; 5 g/L de polyester) est supérieure à 40 mL/g et inférieure à 120 mL/g.

2. Utilisation selon la revendication 1, **caractérisé en ce que** le 1,4 : 3,6-dianhydrohexitol (A) est l'isosorbide.

3. Utilisation selon l'une des revendications 1 ou 2, **caractérisé en ce que** le polyester est exempt de motif diol alicyclique ou comprend une quantité molaire de motifs diol alicyclique, par rapport à la totalité des motifs monomériques du polyester, inférieure à 1%, de préférence le polyester est exempt de motif diol alicyclique.

4. Utilisation selon la revendication 3, **caractérisé en ce que** le polyester est exempt de 1,4-cyclohexanedimethanol, de 1,2-cyclohexanedimethanol, de 1,3-cyclohexanedimethanol ou d'un mélange de ces diols.

5. Utilisation selon l'une des revendications 1 à 4, **caractérisé en ce que** l'objet d'impression 3D comprend un ou plusieurs additifs.

6. Utilisation selon l'une des revendications 1 à 5, **caractérisé en ce que** l'objet d'impression 3D comprend un mélange polymérique constitué dudit polyester thermoplastique et d'un ou plusieurs polymères additionnels, ledit mélange comprenant au moins 30 % en poids de polyester thermoplastique par rapport au poids total dudit mélange, de préférence ledit un ou plusieurs polymères additionnels étant choisis parmi des polyesters, tels que le polybutylènetéréphtalate (PBT), l'acide polylactique (PLA), le polybutylene succinate (PBS), le polybutylene succinate adipate (PBSA), le polyéthylène terephtalate PET, le polyéthylène terephtalate glycolisé (PETg), des polycarbonates (PC), des polyamides (PA), l'acrylonitrile butadiène styrène (ABS), des polyurethanes thermoplastiques (TPU), le polyétheréthercétone (PEEK), des polyacrylates.

7. Objet d'impression 3D comprenant un polyester thermoplastique comprenant :
• au moins un motif 1,4 : 3,6-dianhydrohexitol (A) ;
• au moins un motif butanediol (B) ;
• au moins un motif acide téréphtalique (C) ;
dans lequel le ratio molaire (A)/[(A)+(B)] est d'au moins 0.01 et d'au plus 0.60 :
ledit polyester étant exempt de motifs diol alicyclique ou comprenant une quantité molaire de motifs diol alicyclique, par rapport à la totalité des motifs monomériques du polyester, inférieure à 5%, et dont la viscosité réduite en solution (35°C ; orthochlorophenol; 5 g/L de polyester) est supérieure à 40 mL/g et inférieure à 120 mL/g.

8. Objet d'impression 3D selon la revendication 7, **caractérisé en ce que** le 1,4 : 3,6-dianhydrohexitol (A) est l'isosorbide.

9. Objet d'impression 3D selon l'une des revendications 7 ou 8, **caractérisé en ce que** le polyester est exempt de motif diol alicyclique ou comprend une quantité molaire de motifs diol alicyclique, par rapport à la totalité des motifs monomériques du polyester, inférieure à 1%, de préférence le polyester est exempt de motif diol alicyclique.

10. Objet d'impression 3D selon la revendication 9, **caractérisé en ce que** le polyester est exempt de 1,4-cyclohexanedimethanol, de 1,2-cyclohexanedimethanol, de 1,3-cyclohexanedimethanol ou d'un mélange de ces diols.

11. Objet d'impression 3D selon l'une des revendications 7 à 10, **caractérisé en ce que** l'objet d'impression 3D comprend un ou plusieurs additifs.

12. Objet d'impression 3D selon l'une des revendications 7 à 11, **caractérisé en ce que** l'objet d'impression 3D comprend un mélange polymérique constitué dudit polyester thermoplastique et d'un ou plusieurs polymères additionnels, ledit mélange comprenant au moins 30 % en poids de polyester thermoplastique par rapport au poids total dudit mélange, de préférence ledit un ou plusieurs polymères additionnels étant choisis parmi des polyesters, tels que le polybutylènetéréphtalate (PBT), l'acide polylactique (PLA), le polybutylene succinate (PBS), le polybutylene succinate adipate (PBSA), le polyéthylène terephtalate PET, le polyéthylène terephtalate glycolisé (PETg), des polycarbonates (PC), des polyamides (PA), l'acrylonitrile butadiène styrène (ABS), des polyurethanes thermoplastiques (TPU), le polyétheréthercétone (PEEK), des polyacrylates.

13. Procédé de fabrication d'un objet d'impression 3D comprenant les étapes suivantes de :
a) Fourniture d'un polyester thermoplastique comprenant au moins un motif 1,4 : 3,6-dianhydrohexitol (A), au moins un motif butanediol (B) autre que les motifs 1,4 : 3,6-dianhydrohexitol (A), au moins un motif acide téréphtalique (C), dans lequel le ratio molaire (A)/[(A)+(B)] est d'au moins 0.01 et d'au plus 0.60, ledit polyester étant exempt de motifs diol alicyclique ou comprenant une quantité molaire de motifs diol alicyclique, par rapport à la totalité des motifs monomériques du polyester, inférieure à 5%, et dont la viscosité réduite en solution (35°C ; phénol (50%m) : ortho-dichlorobenzène (50%m) ; 5 g/L de polyester) est supérieure à 40 mL/g et inférieure à 120 mL/g,
b) Mise en forme du polyester thermoplastique obtenu à l'étape précédente,
c) Impression 3D d'un objet à partir du polyester thermoplastique mis en forme,
d) Récupération de l'objet d'impression 3D.

14. Procédé de fabrication selon la revendication 13, **caractérisé en ce qu'**à l'étape b) le polyester thermoplastique est mis sous la forme d'un fil, de filament, de jonc, de granulés, de pellets ou de poudre.

15. Procédé selon l'une des revendications 13 ou 14, **caractérisé en ce que** l'étape c) d'impression 3D est réalisée par la technique du dépôt de matière fondue ou par la technique du frittage sélectif par laser.

16. Procédé de fabrication selon la revendication 13 à 15, **caractérisé en ce que** le 1,4 : 3,6-dianhydrohexitol (A) est l'isosorbide.

17. Procédé de fabrication selon l'une des revendications 13 à 16, **caractérisé en ce que** le polyester est exempt de motif diol alicyclique ou comprend une quantité molaire de motifs diol alicyclique, par rapport à la totalité des motifs monomériques du polyester, inférieure à 1%, de préférence le polyester est exempt de motif diol alicyclique.

18. Procédé de fabrication selon la revendication 17, **caractérisé en ce que** le polyester est exempt de 1,4-cyclohexanedimethanol, de 1,2-cyclohexanedimethanol, de 1,3-cyclohexanedimethanol ou d'un mélange de ces diols.

19. Procédé de fabrication selon l'une des revendications 13 à 18, **caractérisé en ce que** l'objet d'impression 3D comprend un ou plusieurs additifs.

20. Procédé de fabrication selon l'une des revendications 13 à 19, **caractérisé en ce que** l'objet d'impression 3D comprend un mélange polymérique constitué dudit polyester thermoplastique et d'un ou plusieurs polymères additionnels, ledit mélange comprenant au moins 30 % en poids de polyester thermoplastique par rapport au poids total dudit mélange, de préférence ledit un ou plusieurs polymères additionnels étant choisis parmi des polyesters, tels que le polybutylènetéréphtalate (PBT), l'acide polylactique (PLA), le polybutylene succinate (PBS), le polybutylene succinate adipate (PBSA), le polyéthylène terephtalate PET, le polyéthylène terephtalate glycolisé (PETg), des polycarbonates (PC), des polyamides (PA), l'acrylonitrile butadiène styrène (ABS), des polyurethanes thermoplastiques (TPU), le polyétheréthercétone (PEEK), des polyacrylates.

## Patentansprüche

1. Verwendung eines thermoplastischen Polyesters zur Herstellung eines 3D-Druckobjekts, wobei der Polyester umfasst:
• mindestens eine 1,4:3,6-Dianhydrohexitol-Einheit (A);
• mindestens eine Butanediol-Einheit (B);
• mindestens eine Terephthalsäureeinheit (C);
wobei das Molverhältnis (A)/[(A)+(B)] mindestens 0,01 und höchstens 0,60 beträgt;
wobei der Polyester frei von alicyclischen Diol-Einheiten ist oder eine molare Menge an alicyclischen Diol-Einheiten, bezogen auf die Gesamtmenge an Monomereinheiten des Polyesters, von weniger als 5 % enthält und dessen reduzierte Viskosität in Lösung (35 °C; Orthochlorphenol; 5 g/l Polyester) größer als 40 ml/g und kleiner als 120 ml/g ist.

2. Verwendung nach Anspruch 1, **dadurch gekennzeichnet, dass** das 1,4:3,6-Dianhydrohexitol (A) Isosorbid ist.

3. Verwendung nach einem der Ansprüche 1 oder 2, **dadurch gekennzeichnet, dass** der Polyester frei von alicyclischen Diol-Einheiten ist oder eine molare Menge an alicyclischen Diol-Einheiten, bezogen auf die Gesamtmenge an Monomereinheiten des Polyesters, von weniger als 1 % enthält, wobei vorzugsweise der Polyester frei von alicyclischen Diol-Einheiten ist.

4. Verwendung nach Anspruch 3, **dadurch gekennzeichnet, dass** der Polyester frei von 1,4-Cyclohexandimethanol, 1,2-Cyclohexandimethanol, 1,3-Cyclohexandimethanol oder einer Mischung dieser Diole ist.

5. Verwendung nach einem der Ansprüche 1 bis 4, **dadurch gekennzeichnet, dass** das 3D-Druckobjekt ein oder mehrere Additive umfasst.

6. Verwendung nach einem der Ansprüche 1 bis 5, **dadurch gekennzeichnet, dass** das 3D-Druckobjekt eine Polymermischung umfasst, die aus dem thermoplastischen Polyester und einem oder mehreren zusätzlichen Polymeren besteht, wobei die Mischung mindestens 30 Gew.-% thermoplastischen Polyester, bezogen auf das Gesamtgewicht der Mischung, umfasst, wobei vorzugsweise das eine oder die mehreren zusätzlichen Polymere aus Polyestern gewählt sind, wie Polybutylenterephthalat (PBT), Polymilchsäure (PLA), Polybutylensuccinat (PBS), Polybutylensuccinatadipat (PBSA), Polyethylenterephthalat (PET), glykolisiertes Polyethylenterephthalat (PETg), Polycarbonate (PC), Polyamide (PA), Acrylnitril-Butadien-Styrol (ABS), thermoplastische Polyurethane (TPU), Polyetheretherketon (PEEK) und Polyacrylate.

7. 3D-Druckobjekt, das ein thermoplastisches Polyester umfasst, umfassend:
• mindestens eine 1,4:3,6-Dianhydrohexitol-Einheit (A);
• mindestens eine Butanediol-Einheit (B);
• mindestens eine Terephthalsäureeinheit (C);
wobei das Molverhältnis (A)/[(A)+(B)] mindestens 0,01 und höchstens 0,60 beträgt;
wobei der Polyester frei von alicyclischen Diol-Einheiten ist oder eine molare Menge an alicyclischen Diol-Einheiten, bezogen auf die Gesamtmenge an Monomereinheiten des Polyesters, von weniger als 5 % enthält und dessen reduzierte Viskosität in Lösung (35 °C; Orthochlorphenol; 5 g/l Polyester) größer als 40 ml/g und kleiner als 120 ml/g ist.

8. 3D-Druckobjekt nach Anspruch 7, **dadurch gekennzeichnet, dass** das 1,4:3,6-Dianhydrohexitol (A) Isosorbid ist.

9. 3D-Druckobjekt nach einem der Ansprüche 7 oder 8, **dadurch gekennzeichnet, dass** der Polyester frei von alicyclischen Diol-Einheiten ist oder eine molare Menge an alicyclischen Diol-Einheiten, bezogen auf die Gesamtmenge an Monomereinheiten des Polyesters, von weniger als 1 % enthält, wobei vorzugsweise der Polyester frei von alicyclischen Diol-Einheiten ist.

10. 3D-Druckobjekt nach Anspruch 9, **dadurch gekennzeichnet, dass** der Polyester frei von 1,4-Cyclohexandimethanol, 1,2-Cyclohexandimethanol, 1,3-Cyclohexandimethanol oder einer Mischung dieser Diole ist.

11. 3D-Druckobjekt nach einem der Ansprüche 7 bis 10, **dadurch gekennzeichnet, dass** das 3D-Druckobjekt ein oder mehrere Additive umfasst.

12. 3D-Druckobjekt nach einem der Ansprüche 7 bis 11, **dadurch gekennzeichnet, dass** das 3D-Druckobjekt eine Polymermischung umfasst, die aus dem thermoplastischen Polyester und einem oder mehreren zusätzlichen Polymeren besteht, wobei die Mischung mindestens 30 Gew.-% thermoplastischen Polyester, bezogen auf das Gesamtgewicht der Mischung, umfasst, wobei vorzugsweise das eine oder die mehreren zusätzlichen Polymere aus Polyestern gewählt sind, wie Polybutylenterephthalat (PBT), Polymilchsäure (PLA), Polybutylensuccinat (PBS), Polybutylensuccinatadipat (PBSA), Polyethylenterephthalat (PET), glykolisiertes Polyethylenterephthalat (PETg), Polycarbonate (PC), Polyamide (PA), Acrylnitril-Butadien-Styrol (ABS), thermoplastische Polyurethane (TPU), Polyetheretherketon (PEEK) und Polyacrylate.

13. Verfahren zur Herstellung eines 3D-Druckobjekts, das die folgenden Schritte umfasst:
a) Bereitstellen eines thermoplastischen Polyesters, der aus mindestens einer 1,4: 3,6-Dianhydrohexitol (A), mindestens einer Butasnedioleinheit (B), die sich von den 1,4:3,6-Dianhydrohexitoleinheiten (A) unterscheidet, mindestens einer Terephthalsäureeinheit (C) besteht, wobei das Molverhältnis (A)/[(A)+(B)] mindestens 0,01 und höchstens 0,60 beträgt, wobei der Polyester frei von alicyclischen Diol-Einheiten ist oder eine molare Menge an alicyclischen Diol-Einheiten enthält, die bezogen auf die Gesamtmenge an Monomereinheiten des Polyesters weniger als 5 % beträgt, und dessen reduzierte Viskosität in Lösung (35 °C; Phenol (50%m) : Orthodichlorbenzol; 5 g/l Polyester) größer als 40 ml/g und kleiner als 120 ml/g ist,
b) Formen des im vorherigen Schritt erhaltenen thermoplastischen Polyesters,
c) 3D-Druck eines Objekts aus dem geformten thermoplastischen Polyester,
d) Entnahme des 3D-Druckobjekts.

14. Herstellungsverfahren nach Anspruch 13, **dadurch gekennzeichnet, dass** in Schritt b) der thermoplastische Polyester in Form eines Fadens, Filaments, Stabes, Granulats, Pellets oder Pulvers vorliegt.

15. Verfahren nach einem der Ansprüche 13 oder 14, **dadurch gekennzeichnet, dass** der Schritt c) des 3D-Drucks durch die Schmelzabscheidungstechnik oder durch die selektive Lasersintertechnik durchgeführt wird.

16. Herstellungsverfahren nach einem der Ansprüche 13 bis 15, **dadurch gekennzeichnet, dass** das 1,4:3,6-Dianhydrohexitol (A) Isosorbid ist.

17. Herstellungsverfahren nach einem der Ansprüche 13 bis 16, **dadurch gekennzeichnet**, **dadurch gekennzeichnet, dass** der Polyester frei von alicyclischen Diol-Einheiten ist oder eine molare Menge an alicyclischen Diol-Einheiten, bezogen auf die Gesamtmenge an Monomereinheiten des Polyesters, von weniger als 1 % enthält, wobei vorzugsweise der Polyester frei von alicyclischen Diol-Einheiten ist.

18. Herstellungsverfahren nach Anspruch 17, **dadurch gekennzeichnet, dass** der Polyester frei von 1,4-Cyclohexandimethanol, 1,2-Cyclohexandimethanol, 1,3-Cyclohexandimethanol oder einer Mischung dieser Diole ist.

19. Herstellungsverfahren nach einem der Ansprüche 13 bis 18, **dadurch gekennzeichnet, dass** das 3D-Druckobjekt ein oder mehrere Additive umfasst.

20. Herstellungsverfahren nach einem der Ansprüche 13 bis 19, **dadurch gekennzeichnet, dass** das 3D-Druckobjekt eine Polymermischung umfasst, die aus dem thermoplastischen Polyester und einem oder mehreren zusätzlichen Polymeren besteht, wobei die Mischung mindestens 30 Gew.-% thermoplastischen Polyester, bezogen auf das Gesamtgewicht der Mischung, umfasst, wobei das eine oder die mehreren zusätzlichen Polymere vorzugsweise aus Polyestern gewählt sind, wie Polybutylenterephthalat (PBT), Polymilchsäure (PLA), Polybutylensuccinat (PBS), Polybutylensuccinatadipat (PBSA), Polyethylenterephthalat (PET), glykolisiertes Polyethylenterephthalat (PETg), Polycarbonate (PC), Polyamide (PA), Acrylnitril-Butadien-Styrol (ABS), thermoplastische Polyurethane (TPU), Polyetheretherketon (PEEK) und Polyacrylate.

## Claims

1. Use of a thermoplastic polyester for producing a 3D-printed object, said polyester comprising:
• at least one 1,4:3,6-dianhydrohexitol unit (A);
• at least one ethylene glycol unit (B);
• at least one terephthalic acid unit (C);
wherein the molar ratio (A)/[(A)+(B)] is at least 0.01 and at most 0.60;
said polyester being free of alicyclic diol units or comprising a molar amount of alicyclic diol units, relative to the total of monomeric units of the polyester, of less than 5%, and the reduced viscosity in solution of which (35°C; orthochlorophenol; 5 g/L polyester) is greater than 40 mL/g and less than 120 mL/g.

2. Use according to claim 1, **characterized in that** the 1,4:3,6-dianhydrohexitol (A) is isosorbide.

3. Use according to claim 1 or 2, **characterized in that** the polyester is free of alicyclic diol units or comprises a molar amount of alicyclic diol units, relative to the total monomeric units of the polyester, of less than 1%, preferably the polyester is free of alicyclic diol units

4. Use according to claim 3, **characterized in that** the polyester is free of 1,4-cyclohexanedimethanol, 1,2-cyclohexanedimethanol, 1,3-cyclohexanedimethanol or a mixture of these diols.

5. Use according to any one of claims 1 to 4, **characterized in that** the 3D printing object comprises one or more additives.

6. Use according to any one of claims 1 to 5, **characterized in that** the 3D printed object comprises a polymer mixture consisting of said thermoplastic polyester and one or more additional polymers, said mixture comprising at least 30% by weight of thermoplastic polyester relative to the total weight of said mixture, preferably said one or more additional polymers being selected from polyesters, such as polybutylene terephthalate (PBT), polylactic acid (PLA), polybutylene succinate (PBS), polybutylene succinate adipate (PBSA), polyethylene terephthalate (PET), glycolized polyethylene terephthalate (PETg), polycarbonates (PC), polyamides (PA), acrylonitrile butadiene styrene (ABS), thermoplastic polyurethanes (TPU), polyetheretherketone (PEEK), polyacrylates.

7. 3D-printed object comprising a thermoplastic polyester consisting of:
• at least one 1,4:3,6-dianhydrohexitol unit (A);
• at least one ethylene glycol unit (B);
• at least one terephthalic acid unit (C);
wherein the molar ratio (A)/[(A)+(B)] is at least 0.01 and at most 0.60;
said polyester being free of alicyclic diol units or comprising a molar amount of alicyclic diol units, relative to the total of monomeric units in the polyester, of less than 5%, and the reduced viscosity in solution (35°C; orthochlorophenol; 5 g/L polyester) is greater than 40 mL/g and less than 120 mL/g.

8. 3D printing object according to claim 7, **characterized in that** the 1,4:3,6-dianhydrohexitol (A) is isosorbide.

9. 3D printing object according to claim 7 or 8, **characterized in that** the polyester is free of alicyclic diol units or comprises a molar amount of alicyclic diol units, relative to the total monomeric units of the polyester, of less than 1%, preferably the polyester is free of alicyclic diol units.

10. 3D printing object according to claim 9, **characterized in that** the polyester is free of 1,4-cyclohexanedimethanol, 1,2-cyclohexanedimethanol, 1,3-cyclohexanedimethanol or a mixture of these diols.

11. 3D printing object according to any one of claims 7 to 10, **characterized in that** the 3D printing object comprises one or more additives.

12. 3D printing object according to any one of claims 7 to 11, **characterized in that** the 3D printing object comprises a polymer mixture consisting of said thermoplastic polyester and one or more additional polymers, said mixture comprising at least 30% by weight of thermoplastic polyester relative to the total weight of said mixture, preferably said one or more additional polymers being selected from polyesters, such as polybutylene terephthalate (PBT), polylactic acid (PLA), polybutylene succinate (PBS), polybutylene succinate adipate (PBSA), polyethylene terephthalate (PET), glycolized polyethylene terephthalate (PETg), polycarbonates (PC), polyamides (PA), acrylonitrile butadiene styrene (ABS), thermoplastic polyurethanes (TPU), polyetheretherketone (PEEK), and polyacrylates.

13. Method for manufacturing a 3D-printed object comprising the following steps of:
a) Providing a thermoplastic polyester consisting of at least one 1,4:3,6-dianhydrohexitol unit (A), at least one ethylene glycol unit (B) other than 1,4:3,6-dianhydrohexitol (A) units, at least one terephthalic acid unit (C), wherein the molar ratio (A)/[(A)+(B)] is at least 0.01 and at most 0.60, said polyester being free of alicyclic diol units or comprising a molar amount of alicyclic diol units, relative to the total monomeric units of the polyester, of less than 5%, and the reduced viscosity in solution of which (35°C; orthochlorophenol; 5 g/L of polyester) is greater than 40 mL/g and less than 120 mL/g,
b) Shaping the thermoplastic polyester obtained in the preceding step,
c) 3D printing an object from the shaped thermoplastic polyester,
d) Recovering the 3D-printed object.

14. Method for manufacturing according to claim 13, **characterized in that** in step b) the thermoplastic polyester is shaped like a thread, filament, rod, granules, pellets or powder.

15. Method according to claim 3 or 4, **characterized in that** the 3D printing step c) is carried out by the fused deposition modeling technique or by the selective laser sintering technique.

16. Method for manufacturing according to any one of claims 13 to 15, **characterized in that** the 1,4:3,6-dianhydrohexitol (A) is isosorbide.

17. Method for manufacturing according to any one of claims 13 to 16, **characterized in that** the polyester is free of alicyclic diol units or comprises a molar amount of alicyclic diol units, relative to the total monomer units of the polyester, of less than 1%, preferably the polyester is free of alicyclic diol units.

18. Method for manufacturing according to claim 17, **characterized in that** the polyester is free of 1,4-cyclohexanedimethanol, 1,2-cyclohexanedimethanol, 1,3-cyclohexanedimethanol or a mixture of these diols.

19. Method for manufacturing according to any one of claims 13 to 18, **characterized in that** the 3D printing object comprises one or more additives.

20. Method for manufacturing according to any one of claims 13 to 19, **characterized in that** the 3D printing object comprises a polymer mixture consisting of said thermoplastic polyester and one or more additional polymers, said mixture comprising at least 30% by weight of thermoplastic polyester relative to the total weight of said mixture, preferably said one or more additional polymers being selected from polyesters, such as polybutylene terephthalate (PBT), polylactic acid (PLA), polybutylene succinate (PBS), polybutylene succinate adipate (PBSA), polyethylene terephthalate (PET), glycolized polyethylene terephthalate (PETg), polycarbonates (PC), polyamides (PA), acrylonitrile butadiene styrene (ABS), thermoplastic polyurethanes (TPU), polyetheretherketone (PEEK), and polyacrylates.
